Europäisches Patentamt

(19) European Patent Office

Office européen des brevets

(11) Veröffentlichungsnummer: **0 235 371 B1**

(12) **EUROPÄISCHE PATENTSCHRIFT**

(45) Veröffentlichungstag der Patentschrift:
19.09.90

(51) Int. Cl.⁵: **H04Q 7/02**

(21) Anmeldenummer: **86116397.0**

(22) Anmeldetag: **26.11.86**

(54) **Paging-System und Steuerungsverfahren dafür.**

(30) Priorität: **03.02.86 DE 3603169**

(43) Veröffentlichungstag der Anmeldung:
**09.09.87 Patentblatt 87/37**

(45) Bekanntmachung des Hinweises auf die Patenterteilung:
**19.09.90 Patentblatt 90/38**

(84) Benannte Vertragsstaaten:
**CH DE GB LI SE**

(56) Entgegenhaltungen:
**EP-A- 0 111 164**
**US-A- 3 836 726**
**US-A- 4 178 476**

**TN-NACHRICHTEN TELEFONBAU UND NORMALZEIT,
Nr. 84, 1982, Dreieich, DE; M. HEINZ et al.:
"Personenruf-Funkanlage für landesweite Rufnetze"
1980 INTERNATIONAL ZURICH SEMINAR ON DIGITAL
COMMUNICATIONS, 4. - 6. März 1980, Zürich, Seiten
C9.1-C9.5, New York, US; R.H. TRIDGELL: "The
application of coding techniques to radiopaging"**

(73) Patentinhaber: **ANT Nachrichtentechnik GmbH,
Gerberstrasse 33, D-7150 Backnang(DE)**

(72) Erfinder: **Rötsch, Gerald, Dipl.-Ing., Dammstrasse 59,
D-3320 Salzgitter 1(DE)**
Erfinder: **Drake, Jochen, Dipl.-Ing., Am Pfingstanger 4d,
D-3340 Wolfenbüttel(DE)**

(74) Vertreter: **Wiechmann, Manfred, Dipl.-Ing., ANT
Nachrichtentechnik GmbH
Gerberstrasse 33 Postfach 11 20, D-7150 Backnang(DE)**

**Beschreibung**

Ein Paging-System (Funkrufsystem) kann auf einen bestimmten geographischen oder regionalen (betrieblichen) Bereich beschränkt sein, kann aber auch ein landesweites oder sogar landesübergreifendes System darstellen. Es besteht aus einer Eingangsschnittstelle einer Zentrale Z (Rechner), einem Verteilnetz V mit m Regionalverteilern RV mit jeweils n bzw. o bzw. p usw. Zonenverteilern ZV, einem Sendernetz und drahtlosen, mobilen Ruf-Empfängern R (Figur). Das Sendernetz ist dabei in jeweils einer von zahlreichen Zonen als Gleichwellennetz ausgelegt. Die Sender (S) erhalten die auszustrahlenden Nutztelegramme aus dem Verteilnetz über Modulationskanäle.

In der Zentrale Z werden die aus einem Eingangsnetz E eingehenden Informationen (Paging-Ruf-Aufforderungen) aufgenommen. Sie wandelt die eingehenden Paging-Ruf-Aufforderungen in Paging-Telegramm-Blöcke um und steuert deren Weiterleitung über das Verteilnetz V an das Sendernetz S.

Weiterhin muß die Zentrale Z alle für eine sichere Funktionsweise des Paging-Systems notwendigen Funktionen überwachen und steuern können. Ein an die Zentrale Z anschließbares Bediengerät B erlaubt es, sowohl Betriebsparameter als auch Teilnehmerdaten während des Betriebes zu steuern, zu kontrollieren und gegebenenfalls zu modifizieren.

Es ist Aufgabe der Erfindung, bei einem Paging-System, bei dem für die Paging-Telegramm-Blöcke der POCSAG-Code benutzt wird, die einwandfreie Funktion sicherzustellen, indem dafür gesorgt wird, daß alle Systemkomponenten (RV, ZV und S) in eindeutige Weise gesteuert werden können.

Diese Aufgabe wird durch ein Paging-Verfahren bzw. System mit den Merkmalen der Patentansprüche 2 bzw. 7 gelöst. Vorteilhafte Weiterbildungen sind in den Unteransprüchen angegeben.

Hauptmerkmal der Erfindung ist es, für die Steuerung der Systemkomponenten den POCSAG-Code zu verwenden. Hinsichtlich der Übertragung zu den einzelnen Systemkomponenten sind 2 Fälle zu unterscheiden:
- Übertragung der Steuertelegramme gemeinsam mit den Nutztelegrammen über einen Modulationskanal;
- getrennte Übertragung der Steuertelegramme und der Nutztelegramme.

Im ersten Fall werden aus dem Codevorrat des POCSAG-Codes ein oder mehrere POCSAG-Telegramme (Rufadressen) für den Rufbetrieb gesperrt und für die Steuerung der Systemkomponenten reserviert. Auf Grund der großen Anzahl von Rufadressen des POCSAG-Codes ($4 \times 10^6$) ist eine Sperrung (Reservierung von einer oder mehreren Rufadressen für Systemsteuerzwecke) durchaus vertretbar.

Im letztgenannten Fall steht für die Steuerzwecke der gesamte Codevorrat zur Verfügung. Da hier für Nutztelegramme und Steuertelegramme verschiedene Übertragungskanäle verwendet werden, erhöht sich in diesem Fall die Systemsicherheit. Nutztelegramme gelangen nicht auf eine Steuertelegramm-Auswertelogik, und umgekehrt gelangen Steuertelegramme nicht auf einen Nutzkanal. Der Übertragungskanal für die Steuertelegramme kann zusätzlich noch benutzt werden, um Quittungsmeldungen von den Systemkomponenten an die Zentrale zu übermitteln.

Vorteil dieser Verfahrensweise ist es, daß ein einheitliches Codeformat für die Übertragung zwischen Zentrale und den Systemkomponenten des Verteilnetzes und des Sendernetzes verwendet wird. Ein solches System bietet ferner den Vorteil der Verwendung einer einheitlichen Technik. So kann z.B. auf bereits vorhandene Hardware-Komponenten der Ruf-Empfänger (Demodulator, Decoder) und gegebenenfalls auf Software-Strukturen zurückgegriffen werden.

Durch die Verwendung eines einheitlichen Codeformats für Nutz- und Steuertelegramme werden an die jeweiligen Übertragungskanäle die gleichen Anforderungen gestellt. Weiterhin bietet ein solches System den Vorteil einer guten Systemübersichtlichkeit.

Jedes POCSAG-Telegramm besteht aus dem Adreß-Codewort und gegebenenfalls aus einem oder mehreren Nachrichten (Message)-Codewörtern.

Verwendet man z.B. für die Steuerung der Systemkomponenten (RV, ZV und S) unterschiedliche Adreß-Codewörter, so können diese den verschiedenen Ebenen des Verteilnetzes (RV, ZV) und dem Sendernetz zugeordnet werden. In dem oder in den Nachrichten-Codewörtern ist dann zusätzlich sowohl eine individuelle Adressierung der einzelnen Geräte als auch die Übertragung spezieller Steuerbefehle möglich.

Als Steuerbefehle können z.B. in Betracht kommen:
- Steuerung der Umschaltung zwischen gedoppelten Systemkomponenten;
- Abschaltung von gestörten Systemkomponenten;
- Steuerung der Sendertastung und gegebenenfalls die Übertragung der aktuellen Rufblocklänge; mit dieser Information kann der Sender im Anschluß an einen Rufblock automatisch abgeschaltet werden, d.h. es ist kein gesonderter Ausschaltbefehl erforderlich; bei Verwendung eines gemeinsamen Übertragungskanals kann in diesem Fall die Auswertelogik nach Erkennen eines Einschaltbefehls vom Nutzkanal getrennt werden und mit einem intern erzeugten Ausschaltbefehl wieder auf den Nutzkanal geschaltet werden; damit ist sichergestellt, daß die Auswertelogik während der Nutztelegramme inaktiv ist;
- Frequenzsteuerung der Sender;
das Sendernetz eines Paging-Systems ist in der Regel in einzelne Zonen untergliedert, wobei jede Zone als ein Gleichwellennetz betrieben wird; zur funktechnischen Entkopplung arbeiten benachbarte Zonen im Zeitschlitzbetrieb; kombiniert man den Zeitschlitzbetrieb mit der Verwendung mehrerer Frequenzen (DE-OS 33 21 997), so läßt sich der Rufdurchsatz erhöhen; zu diesem Zweck müssen die Sender benachbarter Rufzonen im gleichen Zeitschlitz auf unterschiedlichen Frequenzen arbeiten; mit Hilfe eines Frequenzsteuerungsbefehls ist die Zentrale in der Lage, die Frequenzaussendung in den einzelnen Zonen zu steuern; - Leistungssteuerung der Sender;
- Betriebsartensteuerung der Sender.

Ein POCSAG-Nachrichten-Codewort umfaßt 32 Bit, wobei 20 Bit als Nachrichtenumfang zur Verfügung stehen. Mit dem Nachrichtenumfang eines oder auch mehrerer Nachrichten-Codewörter können die individuelle Geräteadresse sowie die Steuerbefehle entweder in codierter Form (z.B. BCD) oder aber in bitweiser Codierung (d.h., jedes Bit ist einer speziellen Funktion zugeordnet) übertragen werden.

Für den sicheren Betrieb eines Paging-Systems ist es ferner wichtig, daß die Zentrale über die Betriebszustände der Systemkomponenten (Geräte des Verteilnetzes V und des Sendernetzes S) informiert ist.
Wie für den Steuerungsweg (Zentrale zu den einzelnen Systemkomponenten) so kann man den POCSAG-Code auch für den Quittungsweg, d.h. für Meldungen der Systemkomponenten an die Zentrale, verwenden. Da die Signale des Quittungsweges nicht über das Sendernetz abgestrahlt werden, steht für diesen Zweck der gesamte Codevorrat des POCSAG-Codes zur Verfügung.

Analog zur Systemkomponentensteuerung ist es auch hier zweckmäßig, den einzelnen Ebenen des Verteilnetzes (RV, ZV) und des Sendernetzes (S) verschiedene Adreß-Codewörter zuzuweisen. In dem oder in den Nachrichten-Codewörtern kann dann neben der individuellen Geräteadresse der aktuelle Betriebszustand der Zentrale übermittelt werden. Auch hier kann die Übermittlung in codierter Form oder in bitweiser Codierung erfolgen.
Als Betriebszustandsmeldungen (Quittungen) können z.B. in Betracht kommen:
- bei gedoppelten Systemkomponenten Quittierung einer erfolgten Umschaltung;
- Meldungen über Fehlfunktionen.

Abweichend von dem zuvor beschriebenen Verfahren ist es auch möglich, für alle Systemkomponenten (Steuerungsweg und/oder Quittungsweg) nur ein Adreß-Codewort zu verwenden.
In diesem Fall wird dann die Zuordnung zu den Ebenen des Verteilnetzes (RV, ZV) und des Sendernetzes (S) ebenfalls im Nachrichten-Codewort vorgenommen werden. Für die Individualadressierungen sowie die Möglichkeit der Übermittlung von Steuerbefehlen und Quittungsmeldungen würde dieses keine Einschränkung darstellen, da gegebenenfalls zusätzliche Nachrichten-Codewörter verwendet werden könnten.

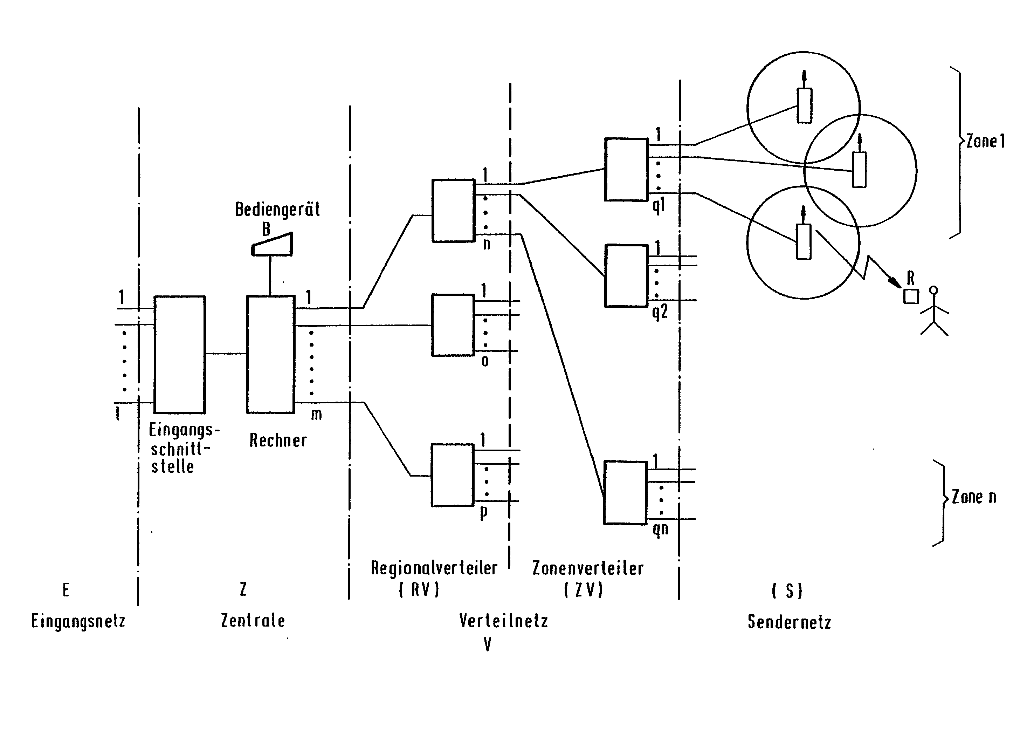

**Patentansprüche**

1. Steuerungsverfahren für ein Paging-System, bei dem für die Paging-Telegramm-Blöcke (Nutztelegramme) der POCSAG-Code benutzt wird und das als stationäre Systemkomponenten Sender (S) für drahtlosen Funkbetrieb mit einem gemeinsamen, vorgeschalteten Verteilnetz (V) aufweist, dadurch gekennzeichnet, daß für die Übertragung von Steuertelegrammen über das Verteilnetz (V) zu den stationären Systemkomponenten (S, V) ebenfalls der POCSAG-Code benutzt wird und daß zur gegenseitigen Entkopplung der Nutztelegramm- und der Steuertelegrammübertragungen getrennte Übertragungskanäle vorgesehen sind.

2. Steuerungsverfahren für ein Paging-System, bei dem für die Paging-Telegramm-Blöcke (Nutztelegramme) der POCSAG-Code benutzt wird und das als stationäre Systemkomponenten Sender (S) für drahtlosen Funkbetrieb mit einem gemeinsamen, vorgeschalteten Verteilnetz (V) aufweist, dadurch gekennzeichnet, daß für die Übertragung von Steuertelegrammen über das Verteilnetz (V) zu den stationären Systemkomponenten (S, V) ebenfalls der POCSAG-Code benutzt wird und zur gegenseitigen Entkopplung der Nutztelegramm- und der Steuertelegrammübertragungen bei Übertragung der Steuertelegramme und der Nutztelegramme über einen gemeinsamen Kanal ein oder mehrere Rufadressen für den Rufbetrieb gesperrt und für die Steuerung der stationären Systemkomponenten (S, V) reserviert sind.

3. Steuerungsverfahren nach Anspruch 1 oder 2, dadurch gekennzeichnet, daß auch für Quittungsmeldungen, die in umgekehrter Richtung wie die Steuertelegramme übertragen werden, Quittungstelegramme im POCSAG-Code benutzt werden.

4. Steuerungsverfahren nach Anspruch 1, 2 oder 3, dadurch gekennzeichnet, daß Steuertelegramme bzw. Quittungstelegramme mit unterschiedlichen Adreß-Codewörtern für unterschiedliche Ebenen (RV, ZV) des Verteilnetzes (V) benutzt werden.

5. Steuerungsverfahren nach Anspruch 4, dadurch gekennzeichnet, daß in den Nachrichten-Codewörtern der Steuertelegramme bzw. Quittungstelegramme individuelle Adressierungen der einzelnen Geräte der stationären Systemkomponenten untergebracht sind.

6. Steuerungsverfahren nach Anspruch 1 oder 2, dadurch gekennzeichnet, daß in Steuer- und/oder Quittungstelegrammen jeweils dasselbe Codewort für die gesteuerten bzw. steuernden stationären Systemkomponenten verwendet wird und die Zuordnung dieser Telegramme jeweils durch mindestens ein Nachrichten-Codewort vorgenommen wird.

7. Paging-System, gesteuert nach einem der vorangehenden Ansprüche, dadurch gekennzeichnet, daß sich einerseits in den Ruf-Empfängern (R) und andererseits in den stationären Systemkomponenten (S, V) die gleichen Nutztelegramm- bzw. Steuertelegramm-Demodulatoren und/oder -Decoder befinden wie in den Rufempfängern.

8. Paging-System nach Anspruch 7 oder gesteuert nach einem der Ansprüche 1 bis 6, dadurch gekennzeichnet, daß es für Nutz-Telegramme die gleichen Modulatoren und/oder Coder aufweist wie für Steuertelegramme.

9. Paging-System nach Anspruch 7 oder gesteuert nach einem der Ansprüche 1 bis 6, dadurch gekennzeichnet, daß es in dem Ruf-Empfänger (R) die gleichen Coder und/oder Decoder und/oder Modulatoren und/oder Demodulatoren für Nutztelegramme bzw. Quittungstelegramme aufweist wie in den stationären Systemkomponenten (S, V).

## Claims

1. Control method for a paging system, in which the POCSAG code is used for the paging telegram blocks (information telegrams) and which as stationary system components displays transmitters (S) for wireless radio operation with a common distributor network (V) connected in front, characterised thereby, that the POCSAG code is likewise used for the transmission of control telegrams by way of the distributor network (V) to the stationary system components (S, V) and that separate transmission channels are provided for the mutual decoupling of the information telegram transmissions and the control telegram transmissions.

2. Control method for a paging system, in which the POCSAG code is used for the paging telegram blocks (information telegrams) and which as stationary system components displays transmitters (S) for wireless radio operation with a common distributor network (V) connected in front, characterised thereby, that the POCSAG code is likewise used for the transmission of control telegrams by way of the distributor network (V) to the stationary system components (S, V) and that, for the mutual decoupling of the information telegram transmissions and the control telegram transmissions in the case of the transmission of the control telegrams and of the information telegrams over a common channel, one or more call addresses are blocked for the call operation and reserved for the control of the stationary system components (S, V).

3. Control method according to claim 1 or 2, characterised thereby, that acknowledgment telegrams in the POCSAG code are used also for acknowledgment reports which are transmitted in the direction opposite to that of the control telegrams.

4. Control method according to claim 1, 2 or 3, characterised thereby, that control telegrams or acknowledgment telegrams with different address code words are used for different planes (RV, ZV) of the distributor network (V).

5. Control method according to claim 4, characterised thereby, that individual addressings of the individual devices of the stationary components are accommodated in the communications code words of the control telegrams or the acknowledgment telegrams.

6. Control method according to claim 1 or 2, characterised thereby, that the same code word is always used in control telegrams and/or acknowledgment telegrams for the controlled or controlling stationary system components and the allocation of these telegrams is undertaken each time by at least one communications code word.

7. Paging system controlled according to one of the preceding claims, characterised thereby, that in the call receivers (R) on the one hand and in the stationary system components (S, V) on the other hand, there are the same demodulators and/or decoders for information telegrams or control telegrams as in the call receivers.

8. Paging system according to claim 7 or controlled according to one of the claims 1 to 6, characterised thereby, that it displays the same modulators and/or coders for information telegrams as for control telegrams.

9. Paging system according to claim 7 or controlled according to one of the claims 1 to 6, characterised thereby, that it displays the same coders and/or decoders and/or modulators and/or demodulators for information telegrams or acknowledgment telegrams in the call receiver (R) as in the stationary system components (S, V).

## Revendications

1. Procédé de commande pour un système d'appel individuel dans lequel, pour les blocs-télégrammes d'appel individuels (télégrammes utiles), on utilise le code POCSAG, et qui présente, en tant que composants fixes du système, des moyens émetteurs (S) pour exploitation hertzienne sans fil auxquels un réseau distributeur commun (V) est relié côté amont, caractérisé par le fait que le code POCSAG est également utilisé pour la transmission de télégrammes de commande, via le réseau distributeur (V), aux composants fixes du système (S, V), et par le fait que, pour le découplage mutuel des transmissions de télégrammes utiles et de télégrammes de commande, il est prévu des canaux de transmission séparés.

2. Procédé de commande pour un système d'appel individuel dans lequel, pour les blocs-télégrammes d'appel individuels (télégrammes utiles), on utilise le code POCSAG, et qui présente, en tant que composants fixes du système, des moyens émetteurs (S) pour exploitation hertzienne sans fil auxquels un réseau distributeur commun (V) est relié côté amont, caractérisé par le fait que le code POCSAG est également utilisé pour la transmission de télégrammes de commande, via le réseau distributeur (V), aux composants fixes du système (S, V), et, pour le découplage mutuel des transmissions de télégrammes utiles et de télégrammes de commande, lors de la transmission des télégrammes de commande et des télégrammes utiles via un canal commun, une ou plusieurs adresses d'appel sont bloquées pour la marche d'appel et réservées pour la commande des composants fixes du système (S, V).

3. Procédé de commande selon revendication 1 ou 2, caractérisé par le fait qu'on utilise aussi des télégrammes d'accusé de réception en code POCSAG pour des messages d'accusé de réception qui sont transmis dans la direction inverse des télégrammes de commande.

4. Procédé de commande caractérisé par le fait que l'on utilise des télégrammes respectifs de commande et d'accusé de réception avec des mots-codes d'adresse différents pour des plans différents (RV, ZV) du réseau distributeur (V).

5. Procédé de commande selon revendication 4, caractérisé par le fait que des adressages individuels des appareils individuels des composants fixes du système sont placés dans les mots-codes d'information des télégrammes respectifs de commande et d'accusé de réception.

6. Procédé de commande selon revendication 1 ou 2, caractérisé par le fait que dans les télégrammes de commande et/ou d'accusé de réception on utilise à chaque fois le même mot-code pour les composants fixes du système commandés ou, selon le cas, assumant la commande, et l'affection de ces télégrammes est effectuée à chaque fois par au moins un mot-code d'information.

7. Système d'appel individuel, commandé selon l'une des revendications précédentes, caractérisé par le fait qu'il y a, d'une part dans les récepteurs d'appel (R) et d'autre part dans les composants fixes du système (S, V) les mêmes démodulateurs et/ou décodeurs de télégrammes utiles ou, selon le cas, de télégrammes de commande, que dans les récepteurs d'appel.

8. Système d'appel individuel selon revendication 7 ou commandé selon l'une des revendications 1 à 6, caractérisé par le fait qu'il présente, pour les télégrammes utiles, les mêmes modulateurs et/ou codeurs que pour les télégrammes de commande.

9. Système d'appel selon revendication 7 ou commandé selon l'une des revendications 1 à 6, caractérisé par le fait qu'il présente, dans le récepteur d'appel (R), les mêmes codeurs et/ou décodeurs et/ou modulateurs et/ou démodulateurs pour télégrammes utiles ou encore télégrammes d'accusé de réception que dans les composants fixes du système (S, V).

Eingangsschnittstelle

Bediengerät
B

Rechner

Regionalverteiler
( RV )

Zonenverteiler
( ZV )

( S )

Zone 1

Zone n

R

E

Z

Verteilnetz
V

Eingangsnetz

Zentrale

Sendernetz

EP 0 235 371 B1